# EUROPÄISCHE PATENTANMELDUNG

(11) **EP 1 586 413 A1**
(43) Veröffentlichungstag der Anmeldung: **19.10.2005**
(21) Anmeldenummer: 05008004.3
(22) Anmeldetag: 13.04.2005
(51) Int. Cl.: B23Q 17/22, B23Q 17/24, G01B 11/00

(54) **Verfahren und Messeinrichtung zum Vermessen von Werkzeugen**

(30) Priorität: 13.04.2004 DE 102004018968
(71) Anmelder: Kelch GmbH + Co. Werkzeugmaschinenfabrik, 73614 Schorndorf (DE)
(72) Erfinder: Egelhof, Dipl.Ing.(FH) Joachim, 73655 Plüderhausen (DE)
(74) Vertreter: Patentanwälte Ruff, Wilhelm, Beier, Dauster & Partner

(57) **Zusammenfassung**

Ein Verfahren zum Vermessen eines Werkzeuges mit Hilfe einer Messeinrichtung, die mit einer Auswerte- und Bedieneinheit ausgestattet ist und der mehrere Adapter zur lagedefinierten Anordnung von Werkzeugen an der Messeinrichtung zugeordnet sind, wobei ein Adapter ein Grundmodul und mindestens ein dem Grundmodul zugeordnetes Einsatzmodul mit einer Werkzeugaufnahme zur Aufnahme eines zu vermessenden Werkzeuges aufweist, hat folgende Schritte: Vermessen des Einsatzmoduls zur Bestimmung von Hilfskoordinaten eines an dem Einsatzmodul angeordneten Hilfsnullpunktes; Aufzeichnen einer für das Einsatzmodul spezifischen Modulinformation an dem Einsatzmodul, wobei die Modulinformation vorzugsweise die Hilfskoordinaten umfasst; Einsetzen des Einsatzmoduls in ein Grundmodul zur Bildung eines Adapters; Automatische Übertragung der Modulinformation von dem Einsatzmodul zur Messeinrichtung mit Hilfe mindestens einer Datenübertragungskamera; Kalibrierung der Messeinrichtung mit Hilfe des Hilfsnullpunkts; Einsetzen eines Werkzeuges in die Werkzeugaufnahme; Vermessen des Werkzeuges. Vorzugsweise wird zum Vermessen des Werkzeuges eine Messkamera verwendet, die auch als Datenübertragungskamera genutzt wird.

## Beschreibung

Die Erfindung betrifft ein Verfahren zum Vermessen eines Werkzeuges mit Hilfe einer Messeinrichtung sowie eine zur Durchführung des Verfahrens geeignete Messeinrichtung.

Vorrichtungen und Verfahren zum Vermessen von Werkzeugen mit Hilfe geeigneter Messeinrichtungen sind bekannt. Die Messeinrichtungen sind in der Regel Bestandteil eines gesonderten Mess- und Einstellgerätes. Eine Messeinrichtung umfasst üblicherweise einen Grundkörper mit einer Aufnahmeeinrichtung zur Aufnahme eines zu vermessenden Werkzeuges und einen am Grundkörper angebrachten Koordinatenschlitten, der das auf das Werkzeug auszurichtende Vermessungssystem trägt. Als optische Vermessungssysteme wurden herkömmlich Projektionsoptiken verwendet, in jüngster Zeit werden zunehmend Kamerasysteme mit angeschlossener Bildverarbeitung eingesetzt.

Um mit einer derartigen Messeinrichtung in kurzer Zeit viele gegebenenfalls unterschiedlich geartete Werkzeuge beziehungsweise Werkzeugtypen vermessen und/oder einstellen zu können, sind bei gattungsgemässen Messeinrichtungen einer Messeinrichtung mehrere Adapter zur lagedefinierten Anordnung von Werkzeugen an der Messeinrichtung zugeordnet. Ein Adapter umfasst ein Grundmodul, das normalerweise fest mit einem Grundkörper der Messeinrichtung verbunden ist, sowie ein oder mehrere dem Grundmodul zugeordnete Einsatzmodule. Ein Einsatzmodul hat eine zur Aufnahme eines zu vermessenden Werkzeuges vorgesehene Werkzeugaufnahme, beispielsweise eine Hohlschaftkegel(HSK)- oder eine Steilkegel(SK)-Werkzeugaufnahme. Durch Verwendung derartiger, modular aufgebauter Adapter ist eine hochflexible Werkzeugvermessung und/oder -einstellung möglich, da die Messeinrichtung durch Auswechslung von Einsatzmodulen schnell und einfach an die Art des zu vermessenden Werkzeuges angepasst werden kann.

Bei Verwendung derartiger Adapter muss die Messeinrichtung vor Beginn des eigentlichen Messvorgangs kalibriert bzw. referenziert werden, um eine eindeutige Beziehung zwischen dem Messkoordinatensystem der Messeinrichtung und dem werkzeugseitigen Werkzeugkoordinatensystem herzustellen. Das Messkoordinatensystem beschreibt das Koordinatensystem des Koordinatenschlittens. Das Werkzeugkoordinatensystem bezieht sich auf einen logischen Nullpunkt eines Einsatzmoduls. Seine Position hängt von der Art der genormten Werkzeugaufnahme im Einsatzmodul ab. Auf diesen logischen Nullpunkt sollen bei der Messung die Werkzeugparameter (z.B. Werkzeuglänge oder Werkzeugradius) bezogen werden. Da der logische Nullpunkt des Werkzeugkoordinatensystems für eine Messung nicht zugänglich ist, wird an jedem Einsatzmodul ein Hilfsnullpunkt angebracht, der auch als Eichkante bezeichnet wird und beispielsweise im oberen Randbereich des Einsatzmoduls angebracht sein kann. Der Hilfsnullpunkt hat gegenüber dem logischen Nullpunkt einen definierten Versatz (Offset) in radialer Richtung und in Längsrichtung, der durch Hilfskoordinaten, d.h. Differenzwerte zwischen logischem Nullpunkt und Hilfsnullpunkt in radialer und in Längsrichtung, beschreibbar ist. Diese Differenzwerte werden durch Vermessen des Einsatzmoduls bestimmt und herkömmlicherweise am Einsatzmodul durch Einprägen, Einätzen oder dergleichen aufgezeichnet. Diese Vermessung des Einsatzmoduls und die Aufzeichnung der Hilfskoordinaten werden üblicherweise beim Hersteller des Einsatzmoduls einmal vorgenommen, so dass der Anwender die z.B. eingeprägten Hilfskoordinaten später für die Messung verwenden kann.

Bei der Werkzeugvermessung mit Hilfe derartiger Adapter war herkömmlich wie folgt verfahren worden. Sollte beispielsweise ein Werkzeug mit Hohlschaftkegel vermessen werden, so wurde zunächst ein Einsatzmodul mit einer HSK-Werkzeugaufnahme in ein Grundmodul zur Bildung eines Adapters mit HSK-Werkzeugaufnahme eingesetzt. Das Werkzeug wurde vorher oder nachher in die Werkzeugaufnahme eingesteckt. Der Bediener las die Hilfskoordinaten, die das gewählte Einsatzmodul individuell beschreiben, vom Einsatzmodul ab und gab sie über eine Tastatur in eine Auswerte- und Bedieneinheit der Messeinrichtung ein. Es konnte auch so sein, dass die Hilfskoordinaten einer Vielzahl von Einsatzmodulen, gegebenenfalls zusammen mit einer Modulidentifikation, beispielsweise einer eindeutigen Nummer, in einer Datenbank abgespeichert wurden. In diesem Fall reichte die Eingabe der Modulnummer, damit die Auswerteeinheit den richtigen Datensatz mit den abgelegten Hilfskoordinaten auswählte. Dann erfolgte die Kalibrierung der Messeinrichtung mit Hilfe des Hilfsnullpunktes, indem beispielsweise ein Fadenkreuz eines optischen Vermessungssystems auf die Eichkante gefahren und die zielgenaue Einstellung des Fadenkreuzes vom Bediener an der Bedieneinheit quittiert wurde. In diesem Moment war eine rechnermässige Verbindung zwischen dem Messkoordinatensystem und dem Werkzeugkoordinatensystem hergestellt und der Adapter war lokalisiert. Nun konnte die eigentliche Messung beginnen, bei der in an sich bekannter Weise beispielsweise die Werkzeuglänge (Z-Wert) und/oder ein Werkzeugradius (X-Wert) und/oder weitere Parameter des Werkzeuges bestimmt wurden. Die ermittelten Messwerte konnten dann rechnergestützt mit Hilfe der Hilfskoordinaten genutzt werden, die Werkzeugparameter bezogen auf den werkzeuginternen, logischen Nullpunkt zu ermitteln und an einer Ausgabeeinheit, beispielsweise einem Bildschirm, auszugeben.

Es hatte sich gezeigt, dass bei diesem Verfahren immer wieder Messfehler auftraten, besonders wenn viele Vermessungsvorgänge an unterschiedlichen Werkzeugtypen im Dauerbetrieb vorgenommen werden mussten. Häufig wurden diese Messfehler erst bemerkt, wenn mit Hilfe eines falsch vermessenen und/oder eingestellten Werkzeuges ein Werkstück bearbeitet wurde. Dies konnte zu Ausschussraten führen, die den Nutzen derartiger hochflexibler Systeme teilweise wieder einschränkten.

Zur Vermeidung dieser Probleme wird in der Patentanmeldung DE 101 24 275 A1 der Anmelderin ein Verfahren vorgestellt, das eine automatische Übertragung der Modulinformation vom Einsatzmodul, bzw. vom Adapter, zur Messeinrichtung vorsieht. Dadurch ist eine automatische Identifikation des verwendeten Adapters möglich und es werden automatisch die richtigen, dem Adapter zugeordneten Daten, insbesondere die Hilfskoordinaten für den Hilfsnullpunkt, für die weitere Messung und Auswertung bereitgestellt. Die vorher übliche manuelle Eingabe von Daten scheidet damit als mögliche Fehlerquelle aus. Dadurch steigt einerseits die Prozesssicherheit und andererseits wird der Messvorgang bedienerfreundlicher, da eine Bedienperson von der Aufgabe der manuellen Eingabe von Daten entlastet werden kann. Der Inhalt der DE 101 24 275 A1 wird durch Bezugnahme zum Inhalt dieser Anmeldung gemacht.

Für die Übertragung der Modulinformation vom Einsatzmodul bzw. vom Adapter zur Messeinrichtung werden in der DE 101 24 275 A1 verschiedene Techniken vorgeschlagen. Beispielsweise ist eine mechanische Übertragung mit Hilfe mechanischer Kodierungen und entsprechender Abtastungen angesprochen, ebenso eine induktive Übertragung oder Funkübertragung von Information. Weiterhin wird vorgeschlagen, eine optische Informationsübertragung zu nutzten, beispielsweise mit Hilfe eines Bar-Codes am Einsatzmodul und eines entsprechende Bar-Code-Lesegerätes auf Seiten der Messeinrichtung. Als Datenträger am Einsatzmodul werden auch halbleiterbasierte Datenträger, z.B. Datenchips, angesprochen, die elektrisch kontaktiert oder berührungsfrei z.B. induktiv ausgelesen werden können. Auch die Verwendung beschreibbarer Datenträger am Einsatzmodul ist angesprochen.

Der Erfindung liegt die Aufgabe zugrunde, ein alternatives Verfahren und eine alternative Messeinrichtung zum Vermessen von Werkzeugen bereitzustellen, bei dem eine automatische Übertragung von Modulinformation von einem Einsatzmodul zu einer Messeinrichtung vorgesehen ist. Dabei soll es insbesondere ermöglicht werden, die Prozesssicherheit bei günstigen Kosten zu stabilisieren oder sogar weiter zu erhöhen.

Zur Lösung dieser Aufgabe schlägt die Erfindung ein Verfahren mit den Merkmalen von Anspruch 1 sowie eine Messeinrichtung mit den Merkmalen von Anspruch 12 vor. Vorteilhafte Weiterbildungen sind in den abhängigen Ansprüchen angegeben. Der Wortlaut sämtlicher Ansprüche wird durch Bezugnahme zum Inhalt der Beschreibung gemacht.

Das erfindungsgemäße Verfahren, bei dem eine automatische Übertragung der Modulinformation vom Einsatzmodul, bzw. vom Adapter, zur Messeinrichtung vorgesehen ist, zeichnet sich dadurch aus, dass diese automatische Übertragung mit Hilfe mindestens einer Datenübertragungskamera durchgeführt wird. Durch Verwendung einer Datenübertragungskamera zur optischen Erfassung der Modulinformation und einer damit verbundenen automatischen Übertragung vom Einsatzmodul bzw. Adapter zur Messeinrichtung sind zahlreiche günstige Varianten des erfindungsgemäßen Verfahrens möglich. Die Modulinformation kann in jeder optisch über eine Kamera erfassbaren Form vorliegen, gegebenenfalls auch in einer für einen Bediener unmittelbar interpretierbaren Form, beispielsweise in Form von Schriftzeichen, Zahlen oder Kombinationen davon. Mit Hilfe einer Datenübertragungskamera kann Modulinformation bei hoher Informationsdichte schnell und weitgehend fehlerfrei übertragen werden.

Bei einer Weiterbildung wird zum Vermessen des Werkzeuges mindestens eine Messkamera verwendet, die auch als Datenübertragungskamera zur automatischen Übertragung der Modulinformation verwendet wird. Die mindestens eine zur Messeinrichtung gehörende Messkamera kann daher mit mehrfachem Nutzen eingesetzt werden, da sie auch als Informationserfassungseinrichtung zur Erfassung von an dem Einsatzmodul aufgezeichneter Modulinformation dienen kann. Bei optischen Vermessungssystemen, die mindestens eine Messkamera mit angeschlossener Bildverarbeitung haben, kann die automatische Übertragung von Modulinformation daher mit geringem konstruktiven und finanziellen Aufwand realisiert werden, da auf eine gesonderte Datenübertragungskamera zur Erfassung der Modulinformation verzichtet werden kann.

Vorzugsweise ist die mindestens eine Kamera, die sowohl als Messkamera, als auch als Datenübertragungskamera verwendet werden soll, an der Messeinrichtung derart beweglich angeordnet, dass sie zwischen einer Messposition (zum Vermessen des Werkzeuges) und einer Datenübertragungsposition (zur Erfassung der Modulinformation) verfahren werden kann, um für jede Nutzung optimal positioniert zu sein.

Die für die Vermessung und die Datenübertragung verwendete Kamera (Mess- und Datenübertragungskamera) ist vorzugsweise hinsichtlich Schärfentiefe, Bildfeldgröße, Empfindlichkeit und/oder anderer Kameraparametern so ausgelegt, dass sie ohne Umstellung sowohl für die Vermessung als auch für die optische Datenerfassung und Datenübertragung genutzt werden kann. Es reicht in diesem Falle aus, wenn die angeschlossene Bildauswertungseinheit zwischen einer Datenübertragungskonfiguration und einer Messkonfiguration umgestellt wird, z.B. durch Aktivierung unterschiedlicher Auswerteprogramme einer Bildauswertungssoftware. Die Umstellung kann automatisch ablaufen.

Bei einer Weiterbildung wird eine Flächenkamera als Datenübertragungskamera verwendet. Hierdurch ist es möglich, mit einer während der Informationserfassung unbeweglichen Kamera Modulinformationen zu erfassen, die in Form einer zweidimensional strukturierten, optisch erfassbaren Information am Modul angebracht ist. Es kann sich dabei beispielsweise um eine auch durch einen Bediener unmittelbar interpretierbare Information handeln, die beispielsweise Zahlen, Buchstaben, Symbole und/oder Kombinationen hieraus enthält, die die Modulinformation eindeutig tragen. Der Datenträger kann durch ein entsprechend gekennzeichnetes Einsatzmodul gebildet sein, das z.B. einen Schriftzug mit der Modulinformation aufweist. Eine angeschlossene Bildverarbeitungseinrichtung kann entsprechende OCR-Software zur optischen Zeichenerkennung enthalten. Im Allgemeinen kann mit Hilfe eines zweidimensional strukturierten, optisch erfassbaren Datenträgers auf kleiner Fläche eine hohe Datendichte bereitgestellt werden, so dass in einem durch eine Kamera gut erfassbaren kleinen Bereich viel Information und/oder teilweise redundante Information zur Erhöhung der Fehlersicherheit untergebracht werden kann.

Bei einer bevorzugten Ausführungsform wird mindestens ein Datenträger mit einem sogenannten Data Matrix Code verwendet. Ähnlich wie ein eindimensionaler Barcode repräsentiert ein zweidimensionaler Data Matrix Code die Information durch helle und dunkle rechteckige Felder. Dieser Code kann beispielsweise direkt mit einer Laserbeschriftungsmaschine in ein Einsatzmodul eingraviert oder auf ein Etikett gedruckt an das Einsatzmodul aufgeklebt sein. Er zeichnet sich durch hohe Datendichte und Fehlersicherheit aus. Andere Matrixcodes sind ebenfalls möglich.

Ist der die Modulinformation tragende Bereich größer als das Bildfeld der Datenübertragungskamera in der Datenübertragungskonfiguration, so kann durch Verfahren der Datenübertragungskamera relativ zum Adapter die in einer ggf. zweidimensional strukturierten Form vorliegende Information gescannt werden.

Alternativ zu einer Flächenkamera ist auch die Verwendung mindestens einer Zeilenkamera zur Erfassung von Modulinformation möglich. Mit dieser kann beispielsweise die in einem Bar-Code vorliegende Modulinformation erfasst werden, ohne dass die Kamera hierzu bewegt werden muss. Bei Verwendung einer Zeilenkamera kann ebenfalls eine Scanbewegung vorgesehen sein, um die Information aus zweidimensional strukturierten Datenträgern, beispielsweise einem Data Matrix Code, erfassen zu können.

Um die Erfassungssicherheit der Datenübertragungskamera während der Erfassung der Modulinformation zu erhöhen, ist bei bevorzugten Ausführungsformen eine aktive Beleuchtung des die Modulinformation tragenden Datenträgers während der Datenerfassung mit Hilfe eines geeignet ausgerichteten Beleuchtungssystems vorgesehen. Hierdurch kann die Sicherheit der Datenerfassung unabhängig von den Lichtverhältnissen der Umgebung sichergestellt werden, so dass auch in schlecht beleuchteten Räumen kurze Erfassungszeiten und geringe Fehlerraten möglich sind. Die entsprechende Beleuchtungseinrichtung kann in der Nähe der Datenerfassungskamera angebracht und beispielsweise mit dieser verfahrbar sein. Es kann eine Schaltautomatik für die Beleuchtung vorgesehen sein, die so konfiguriert ist, dass die Beleuchtung in einer Vorbereitungsphase für die Datenübertragung automatisch eingeschaltet und nach Abschluss der Datenübertragung vor einer nachfolgenden Messung automatisch wieder abgeschaltet wird, um die Vermessung nicht zu beeinträchtigen.

Um die Prozesssicherheit weiter zu steigern, kann eine Sicherung der Datenübertragung und/oder Datenverarbeitung in der Weise durchgeführt werden, dass eine Übertragung der Modulinformation vom Einsatzmodul zur Messeinrichtung und/oder eine Weiterverarbeitung der Modulinformation nur dann durchführbar ist, wenn der Adapter korrekt zusammengesetzt ist. Hierzu kann eine Prüfeinrichtung zur Prüfung des korrekten Passsitzes zwischen Grundmodul und Einsatzmodul vorgesehen sein, beispielsweise mit einem nur bei korrektem Passsitz betätigbaren Endlagenschalter oder Näherungsschalter, der ein Freigabesignal abgibt, mit dem die Datenübertragung zwischen Einsatzmodul und Messeinrichtung oder die Weiterverarbeitung von übertragenen Daten nur bei korrekt eingesetztem Adapter freigegeben wird.

Bei einer Weiterbildung werden die Verfahrensschritte, die zum Einlesen der Modulinformation erforderlich sind, automatisch durchgeführt, wenn die Steuereinrichtung ein entsprechendes Startsignal für eine automatische Durchführung der für die Datenübertragung notwendigen Schritte erhält. Beispielsweise kann das Einwechseln eines Einsatzmoduls die zum Einlesen der Modulinformation erforderlichen Vorgänge automatisch auslösen. Hierzu kann beispielsweise das oben erwähnte Freigabesignal der Sicherungseinrichtung als Startsignal genutzt werden. In diesem Fall können die automatischen Vorgänge zur Datenübertragung nur dann ablaufen, wenn der Adapter korrekt zusammengesetzt ist. Ebenso ist es möglich, dass die Eingabe einer neuen Adapternummer in die Bedieneinheit zur Erzeugung eines Startsignals verarbeitet wird, dass dann die Vorgänge zur automatischen Übertragung der Modulinformationen einleitet.

Ein zur Durchführung des erfindungsgemässen Verfahrens geeignetes Messsystem zeichnet sich gegenüber herkömmlichen Systemen dadurch aus, dass eine besondere Übertragungseinrichtung zur automatischen Übertragung von Modulinformation zwischen einem zusammengesetzten Adapter und der Messeinrichtung vorgesehen ist. Die Übertragungseinrichtung umfasst auf Seiten der Messeinrichtung mindestens eine Datenübertragungskamera zur optischen Erfassung von Modulinformation, die an einem dem Einsatzmodul zugeordneten Datenträger mit optisch erfassbarer Modulinformation aufgezeichnet ist. Dabei kann das Einsatzmodul selbst als Datenträger dienen, indem es z.B. eine geeignete Markierung, Beschriftung oder sonstige Kennzeichnung aufweist. Gesonderte Datenträger, die ggf. auswechselbar und/oder lösbar am Einsatzmodul befestigt sein können, sind ebenfalls möglich. Einsatzmodule können demgemäss als Teil der Übertragungseinrichtung einen oder mehrere Datenträger zur Aufzeichnung optisch erfassbarer Modulinformation haben oder als Datenträger ausgestaltet sein. Der adapterseitige, optisch auslesbare Datenträger und die Datenübertragungskamera auf Seiten der Messeinrichtung sind so aneinander angepasst, dass zwischen ihnen zumindest bei korrekt zusammengesetztem Adapter ein Datenübertragungskontakt möglich ist. Weitere Einzelheiten des Messsystems sind den vorangegangen Erläuterungen und der nachfolgenden Beschreibung eines Ausführungsbeispieles entnehmbar.

Die vorstehenden und weiteren Merkmale gehen ausser aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können. Es zeigen:
- Fig. 1: zeigt eine schematische Seitenansicht einer Ausführungsform eines erfindungsgemässen Werkzeugmess- und Einstellgerätes;
- Fig. 2: zeigt eine schematische Draufsicht auf eine in Datenübertragungsposition gebrachte Datenübertragungskamera und einen Adapter mit einem optisch auslesbaren Datenträger, der sich im Erfassungsbereich der Datenübertragungskamera befindet; und
- Fig. 3: zeigt eine schrägperspektivische Teilansicht eines Adapters, an dem ein Datenträger mit einem Data Matrix Code angebracht ist.

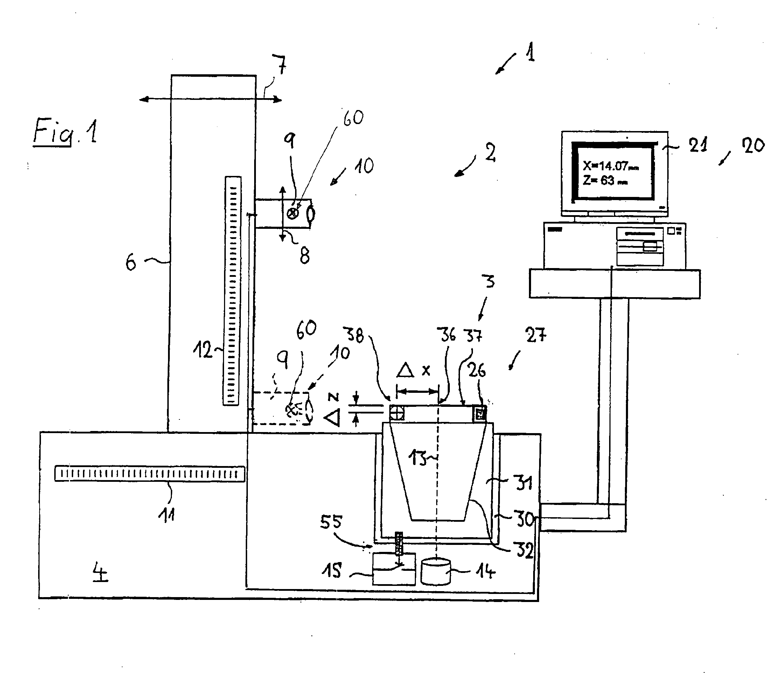

Die schematische Seitenansicht in Fig. 1 zeigt eine Ausführungsform eines erfindungsgemässen Messsystems 1 zur vertikalen Werkzeugvermessung und -einstellung. Das System umfasst ein frei aufstellbares Messgerät 2 und eine Vielzahl dem Messgerät zugeordneter, modular aufgebauter Adapter 3, die der Befestigung der zu vermessenden Werkzeuge am Messgerät dienen. Das Messgerät hat einen Grundkörper 4 mit einer Aufnahmeeinrichtung, in die von oben jeweils ein Adapter passgenau einsetzbar ist. Der Grundkörper trägt einen im einzelnen nicht dargestellten Horizontalschlitten, auf dem eine Säule 6 entlang einer horizontalen X-Achse 7 mit Hilfe von computergesteuerten Schrittmotoren verfahrbar ist. Die Säule 6 trägt an ihrer der Aufnahmeeinrichtung zugewandten Seite einen Vertikalschlitten, der mit Hilfe eines weiteren computergesteuerten Schrittmotors entlang einer vertikalen Z-Achse 8 verfahrbar ist. An dem Vertikalschlitten ist ein Optikträger 9 angebracht, der eine Messkamera 10 trägt, bei der es sich um eine CCD-Kamera (Flächenkamera, Matrix-Kamera) handelt, die an eine Bildauswerteeinrichtung angeschlossen ist. Die als optisches Vermessungssystem für das Werkzeug dienende Messkamera ist in X-und Z-Richtung verfahrbar, um ein in einem Adapter 3 aufgenommenes Werkzeug in das Bildfeld der Messkamera zu bringen. Die Verfahrwege in X- und Z-Richtung werden mit Hilfe schematisch dargestellter Längenmesssysteme 11, 12 erfasst. Bei der gezeigten Dreiachs-Ausführung ist der Adapter noch um eine vertikale C-Achse 13 drehbar, wobei diese Drehung mit einem Rotationsgeber 14 erfassbar ist. Neben dem Rotationsgeber ist ein Endlagenschalter 15 angebracht, der Teil einer später erläuterten Sicherungseinrichtung ist, die eine Datenübertragung und/oder Messung nur bei korrekt eingesetztem Adapter zulässt.

Die gesamte Anlage ist computergesteuert. Hierzu sind die Antriebe für die Horizontal- und Vertikalverschiebung der Messkamera 10 sowie die Drehung des Adapters an eine nicht gezeigte, mit einem Mikroprozessor ausgestattete Steuereinheit angeschlossen. Die Signale der Längenmesssysteme 11, 12 sowie des Drehmesssystems 14 werden in einer Rechnereinheit verarbeitet, die Bestandteil einer Auswerte- und Bedieneinheit 20 ist, der zur Anzeige und/oder Ausgabe von Bedienerabfragen und/oder Daten ein Bildschirm 21 zugeordnet ist. An diesem kann auch ein Teil des von der Messkamera 10 erfassten Bildes, beispielsweise mit einem Ausschnitt einer Werkzeugschneide, angezeigt werden. Die Auswerte- und Bedieneinheit enthält ein Arbeitsprogramm zur Dekodierung von in einem Data Matrix Code kodierter Information (Codelesesoftware). Die Eingabe von Bedienerbefehlen und Daten erfolgt über eine nicht gezeigte Tastatur.

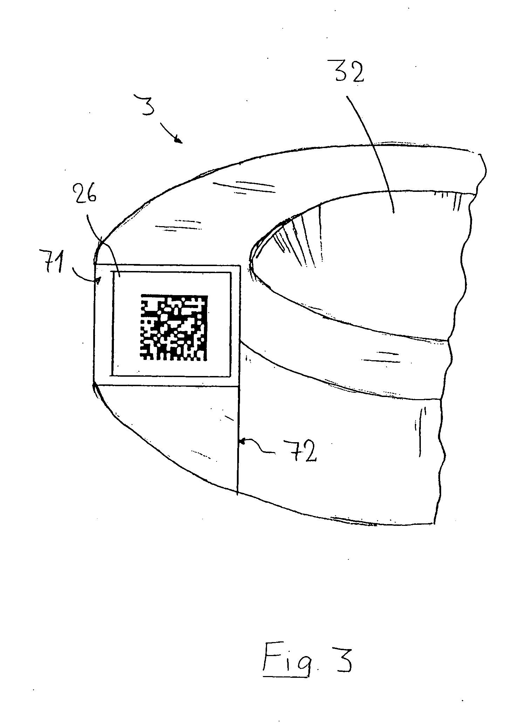

Eine Besonderheit des dargestellten Messsystems besteht darin, dass eine Übertragungseinrichtung 27 zur automatischen Übertragung von Modulinformation zwischen dem Adapter 3 und der Messeinrichtung 2 vorgesehen ist, deren Funktion weiter unten noch näher erläutert wird. Die Übertragungseinrichtung umfasst auf Seiten des Adapters einen Datenträger 26 mit einem optisch lesbaren, zweidimensional strukturierten Data Matrix Code, der im oberen Bereich des Einsatzmoduls des Adapters an dessen Rand angebracht ist und der in kodierter Form Modulinformation über den Adapter enthält (vgl. Fig. 3). Auf Seiten der Messeinrichtung umfasst die Übertragungseinrichtung 27 eine Datenübertragungskamera, die durch die Messkamera 10 gebildet wird. Die wechselweise als Messkamera und als Datenübertragungskamera nutzbare Kamera 10 wird auch als Mess- und Datenübertragungskamera oder einfach als Kamera bezeichnet und ist an der Säule 6 in vertikaler Richtung (entlang Z-Achse 8) und gegebenenfalls entlang der X-Achse in horizontaler Richtung zwischen einer durchgezogen gezeichneten Messposition mit Abstand oberhalb des Adapters und einer gestrichelt gezeichneten Datenübertragungsposition auf Höhe des oberen Rands des Adapters verfahrbar. Wenn die Mess- und Datenübertragungskamera 10 in ihrer Datenübertragungsposition ist und der Adapter 3 derart um seine Achse 13 verdreht ist, dass der Datenträger 26 im Bildfeld der Mess- und Datenübertragungskamera 10 in deren Schärfenzone liegt, so kann die im Datenträger 26 kodierte Modulinformation durch die Kamera 10 optisch erfasst und eine entsprechende Bildinformation an die angeschlossene Auswerteeinheit 20 übertragen werden.

An dem Träger 9 für die Mess- und Datenübertragungskamera 10 ist auf der Seite der Kamera eine schematisch dargestellte Beleuchtungseinrichtung 60 angebracht, deren Lichtquelle so ausgerichtet ist, dass der in die richtige Position verfahrene Datenträger durch die Beleuchtungseinrichtung 60 während der Bilderfassung beleuchtet werden kann, um eine kontrastreiche Abbildung unabhängig von den Lichtverhältnissen der Umgebung sicherzustellen. In der Messposition der Kamera 10 ist die Beleuchtungseinrichtung 60 je nach Messverfahren eingeschaltet oder ausgeschaltet. Die Beleuchtungseinrichtung 60 kann z.B. bei Auflichtmessungen oder zur Schneideninspektion eingeschaltet werden. Bei Messungen mit Hintergrundbeleuchtung des Werkzeuges (Projektionsmessungen zur Konturbestimmung) ist sie dagegen ausgeschaltet. An der in Bezug auf die Achse 13 gegenüber liegenden Seite des Trägers 9 ist eine Hintergrund-Beleuchtungseinrichtung 65 angebracht.

Anhand der Fig. 1 wird nun der Aufbau erfindungsgemässer Adapter näher beschrieben. Der in Fig. 1 gezeigte Adapter 3 ist zweiteilig modular aufgebaut und umfasst ein Basis- bzw. Grundmodul 30 und ein in das Grundmodul ohne Zwischenelemente passgenau einsetzbares Einsatzmodul 31. Das Grundmodul ist maschinenfest im Grundkörper 4 befestigt und sorgt für die richtige Lage und Ausrichtung des Adapter am Messgerät. Das Einsatzmodul 31 hat eine von oben zugängliche Werkzeugaufnahme 32, in die ein zu vermessendes Werkzeug passgenau einsetzbar ist. Es sind Einsatzmodule mit verschiedenen Arten von Werkzeugaufnahmen 32 vorgesehen, die ein Einspannen aller Werkzeugtypen analog zu einer Werkzeugmaschine ermöglichen. Darunter sind insbesondere Steilkegelaufnahmen und Hohlschaftkegelaufnahmen genormter Dimensionen.

Um ein Werkzeug vermessen zu können, welches mit Hilfe eines derartigen Adapters in das Messgerät 2 eingesetzt ist, ist es erforderlich, vor oder nach der Messung einen eindeutigen Bezug zwischen dem Messkoordinatensystem des Messgerätes und einem werkzeugspezifischen Werkzeugkoordinatensystem herzustellen. Die Dimensionsparameter eines zu vermessenden Werkzeugs, beispielsweise eine Länge in Z-Richtung und/oder ein oder mehrere Radien in X-Richtung, müssen bezogen auf dieses Werkzeugkoordinatensystem angegeben werden, um diese Parameter für eine spätere Werkstückbearbeitung mit Hilfe des vermessenen Werkzeuges in die Steuerung einer Werkzeugmaschine übernehmen zu können. Bei der gezeigten Ausführungsform liegt der logische Nullpunkt 36 des Werkzeugkoordinatensystems im Schnittpunkt zwischen der Rotationsachse 13 und einer eingangsseitigen Planfläche 37 des Einsatzmoduls bzw. des Adapters.

Da dieser Ort für eine Referenzierung über die Kamera 10 nicht oder nur schwer zugänglich ist, ist an den Einsatzmodulen jeweils ein Hilfsnullpunkt 38 definiert, der auch als Eichkante bezeichnet wird und normalerweise vor Verwendung eines Einsatzmodules einmal in einem Eichvorgang vermessen wird. Der in Fig. 1 durch ein Fadenkreuzsymbol gekennzeichnete Hilfsnullpunkt 38 ist durch Hilfskoordinaten definiert, die einerseits den radialen Versatz Δx zwischen Hilfsnullpunkt 38 und Rotationsachse 13 und andererseits den axialen Versatz Δz zwischen Hilfsnullpunkt 38 und logischem Nullpunkt 36 angeben. Diese Hilfskoordinaten, bzw. entsprechende Daten, werden nach dem Vermessen des Einsatzmodules im Datenträger 26 kodiert gespeichert bzw. aufgezeichnet. In diesem Fall ist eine Aufzeichnung einer eindeutigen Modulidentifikation, z.B. einer Modulnummer, nicht erforderlich. Wenn die Hilfskoordinaten in einer Datenbank gespeichert sind, kann die Aufzeichnung einer Modulnummer o. dgl. am Datenträger ausreichen, um eine eindeutige Zuordnung von Einsatzmodul und Hilfskoordinaten zu gewährleisten. Ausnahmsweise können auch sowohl die Hilfskoordinaten, als auch eine Modulidentifikation am Datenträger aufgezeichnet sein.

Zu den Daten, die im Datenträger kodiert und/oder in einer Datenbank gespeichert sein können, gehören unter anderem:

Eine Aufnahmeartinformation zur Angabe der Art der am Einsatzmodul bzw. Adapter ausgebildeten Werkzeugaufnahme, z.B. HSK-Aufnahme oder Steilkegelaufnahme.

Eine Rotationslageninformation zur Angabe der Drehlage des Hilfsnullpunktes 38 in Bezug auf einen am Einsatzmodul ausgebildeten Drehlagennullpunkt. Dieser kann beispielsweise durch eine Nut am Einsatzmodul definiert sein, die das Einsetzen des Einsatzmoduls in das Grundmodul in nur einer einzigen Drehposition ermöglicht. Mit Hilfe der Rotationslageninformation ist es bei der Vermessung beispielsweise möglich, gemessene Radienwerte (x-Werte) einer bestimmten Drehlage eines Rotationswerkzeuges zuzuordnen.

Eine Rundlaufinformation; diese kann Daten über die Abweichung der C- Achse 13 von der idealen Rotationssymmetrieachse eines Rotationswerkzeuges enthalten. Diese Abweichungen führen bekanntlich zu unrundem Lauf eines Werkzeuges während der Bearbeitung. Die Rundlaufinformation kann beispielsweise durch eine Nullmessung mit einem geeichten Rundlaufdorn ermittelt werden, wobei dessen Konturdaten in Abhängigkeit vom C-Winkel erfasst werden. Die gespeicherte Rundlaufinformation kann später beispielsweise zur Kompensation von Messfehlern berücksichtigt werden. Es ist möglich, an einem Bearbeitungszentrum eine der Lesevorrichtung 25 entsprechende Informationserfassungseinrichtung vorzusehen, um bei Einsetzen eines Einsatzmoduls in die Spindel der Bearbeitungsmaschine die im Datenträger aufgezeichneten Daten automatisch auszulesen und z.B. zur Rundlaufkompensation zu nutzen.

Eine Modulartinformation kann beispielsweise Daten darüber enthalten, ob ein Einsatzmodul ausschließlich für Messzwecke, oder für andere Zwecke, beispielsweise für eine Verwendung beim thermischen Schrumpfen mit Hilfe von Schrumpffuttern, vorgesehen ist. Im letzteren Fall kann beispielsweise aufgrund der Modulartinformation vor der Messung eine Warnung initiiert werden, falls ein falscher, zum Messen nicht zugelassener Einsatz verwendet wird. Die Modulartinformation kann daher z.B. bei Messgeräten nützlich sein, die mit einem Schrumpfgerät kombiniert sind. Solche Kombi-Geräte erlauben ein thermisches Ein- und Ausschrumpfen und die Werkzeugvermessung in einem einzigen Gerät. Aufgrund der Modulartinformation kann automatisch sichergestellt werden, dass ein zum Schrumpfen verwendeter Einsatz nicht für eine Messung verwendet wird und umgekehrt.

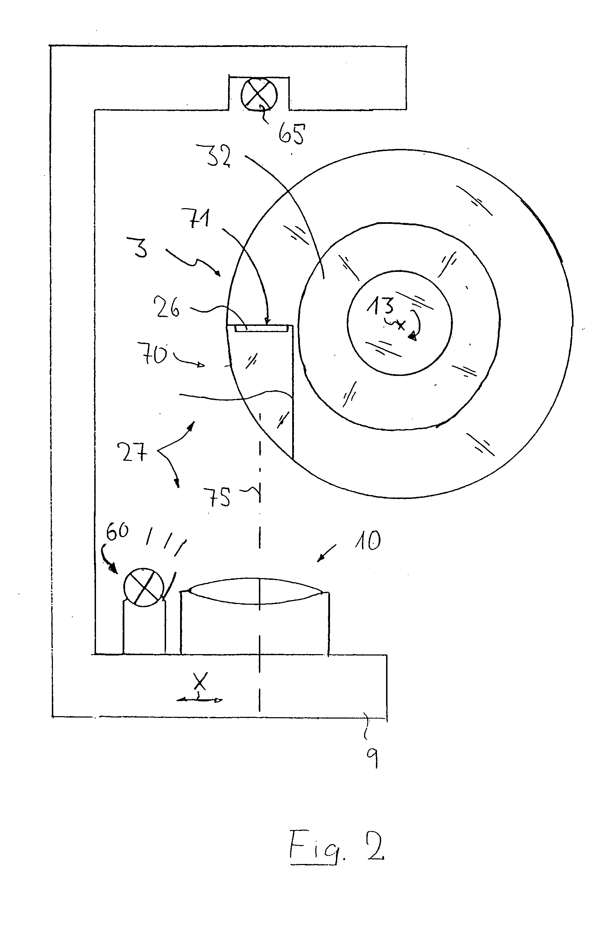

Auch dreiteilige Adapter mit Reduzierungen, wie sie beispielhaft in Fig. 2 der DE 101 24 275 A1 gezeigt sind, können mit optisch lesbaren Datenträgern versehen und genutzt werden. Dabei kann an jedem Einsatzmodul des Adapters ein Datenträger vorgesehen sein.

Wie in Fig. 2 und 3 gut zu erkennen ist, ist am oberen Rand des Einsatzmoduls an einem umlaufenden Bund eine Materialausnehmung 70 vorgesehen, die durch eine in einer Radialebene zur optischen Achse 13 liegende ebene erste Fläche 71 und eine senkrecht dazu und damit tangential zur optischen Achse ausgerichtete zweite ebene Fläche 72 adapterseitig begrenzt ist. Die Drehlage der ersten Fläche 71 in Bezug auf eine Indizierung ist bei allen Einsatzmodulen gleich, so dass automatisch eine richtige Positionierung möglich ist. Der Datenträger 26 liegt in Form eines Klebeetikettes vor, auf dem der Data Matrix Code als zweidimensional strukturiertes Schwarz/weiss-Muster aufgebracht ist. Das Etikett ist auf die Radialfläche 71 aufgeklebt. Wird zur Datenübertragung der Adapter um seine Achse 13 so verdreht, dass die erste Fläche 71 mit dem Datenträger 26 im Wesentlichen senkrecht zur optischen Achse 75 der Kamera 10 ausgerichtet ist, so befindet sich der Datenträger 26 innerhalb des Bildfeldes und der Schärfezone der in ihre Datenübertragungskonfiguration geschalteten Kamera 10, so dass eine zuverlässige Bilderfassung des Data Matrix Codes möglich ist. Für die Datenübertragung und -auswertung ist die Messeinrichtung bzw. die Auswerteeinheit in eine Datenübertragungskonfiguration geschaltet, in der ein Arbeitsprogramm zur Dekodierung der im Data Matrix Code kodierten Modulinformationen (Codelesesoftware) aktiviert ist.

Wird die Kamera 10 als Messkamera benutzt, so wird die Messeinrichtung bzw. ihre Auswerteeinheit in eine Messkonfiguration umgeschaltet, in der eine Bildauswertungssoftware aktiviert ist, um eine Werkzeugvermessung mit hoher Genauigkeit zu ermöglichen, beispielsweise mit einer Auflösung in der Größenordnung von einem oder wenigen µm. Die Umschaltung wird automatisch durch die Steuereinheit der Auswerte- und Bedieneinheit 20 gesteuert.

Ein Arbeitsplatz für eine Werkzeugvermessung und gegebenenfalls Werkzeugeinstellung hat ein derartiges Messgerät sowie eine Vielzahl unterschiedlicher Adapter, um zeitsparend eine Vielzahl unterschiedlicher Werkzeuge mit unterschiedlich geformten Spanneinrichtungen vermessen zu können. Bei der hier beschriebenen Verfahrensvariante sind alle einer Arbeitsstation zugeordneten Einsatzmodule vom Hersteller dieser Module bereits vermessen, und die ermittelten Hilfskoordinaten sind in den Datenträgern der Einsatzmodule abgespeichert. Die modulspezifische Kombination von Offset-Werten stellt eine eindeutige Modulidentifikation dar. Die Aufzeichnung einer Modulnummer ist in diesem Fall entbehrlich, kann aber vorgesehen sein. Weiterhin sind alle in den Datenträgern enthaltenen Informationen auch in einer Datenbank abgespeichert, die in einer Speichereinrichtung der Auswerte- und Bedieneinheit 20 hinterlegt ist. Ein Datensatz dieser Datenbank enthält neben einer eindeutigen Modulidentifikation (z.B. einer Nummer) zumindest auch den Hilfskoordinaten entsprechende Daten, um einen Bezug zwischen Messkoordinatensystem und Werkzeugkoordinatensystem herstellen zu können. Mit diesem Messsystem 1 kann dann wie folgt gearbeitet werden.

Der Bediener des Messsystems wählt zunächst ein zu vermessendes Werkzeug, z.B. einen Fräser, und ein zu der Spanneinrichtung des Werkzeuges passendes Einsatzmodul aus. Das Einsatzmodul wird zur Bildung eines Adapters in das maschinenfeste Grundmodul eingesetzt.

Das zu vermessende Werkzeug wird in die Werkzeugaufnahme eingesetzt. Diese Schritte können in jeder geeigneten Reihenfolge durchgeführt werden, wobei normalerweise zuerst der Adapter zusammengesetzt und anschließend das zu vermessende Werkzeug eingesetzt wird. Das richtige Einsetzen des Einsatzmoduls in das Grundmodul wird bei der gezeigten Ausführungsform mit Hilfe einer Sicherungseinrichtung 55 überwacht, die den Endlagenschalter 15 umfasst, der nur bei korrektem Passsitz des Einsatzmoduls in dem Grundmodul betätigbar ist und im betätigten Zustand ein Freigabesignal an die Auswerteeinheit 20 abgibt, die nur bei empfangenem Freigabesignal die weiteren Verfahrensschritte ermöglicht. Die Sicherungseinrichtung 55 überwacht somit über den Endlagenschalter 15 den korrekten Sitz des Einsatzmoduls und gibt diese Information an die Auswerte- und Bedieneinheit 20 weiter.

Das Einwechseln des Einsatzmoduls kann das Einlesen der Modulinformation automatisch auslösen. Hierzu kann das Messgerät so konfiguriert sein, dass das Steuergerät als Reaktion auf den Empfang des Freigabesignals die für die Datenübertragung der Modulinformation vorgesehenen Schritte automatisch einleitet und die hierfür vorgesehenen Einrichtungen automatisch ansteuert. Alternativ oder zusätzlich kann die Anlage auch so konfigurtiert sein, dass die Eingabe einer neuen Adapternummer in die Bedieneinheit das Einlesen der Modulinformation automatisch auslöst. Wie oben erwähnt, repräsentiert die Adapternummer den logischen Nullpunkt 36, der über den Eichvorgang, der den Bezug zwischen Werkzeugkoordinatensystem und Messkoordinatensystem herstellt, festgelegt wird.

Um sicherzustellen, dass das Werkzeug mit dem richtigen Nullpunkt vermessen wird, ist bei diesem Messgerät automatisch sichergestellt, dass die Modulinformation vom Einsatzmodul an die Messeinrichtung schnell und fehlerfrei übertragen wird.

Dazu wird zunächst die Kamera 10 mit Hilfe geeigneter Antriebe entlang der vertikalen Z-Achse 8 und/oder entlang der horizontalen X-Achse 7 in die in Fig. 1 gestrichelt und in Fig. 2 im Detail dargestellte Datenübertragungsposition verfahren, in der die CCD-Kamera 10 den Datenträger 26 in ihrem Erfassungsbereich (Bildfeld) hat oder haben kann. Sofern der Adapter noch nicht in die in Fig. 2 gezeigte Drehstellung gedreht ist, in der der Datenträger von der Kamera 9 erfasst werden kann, wird der Adapter mit Hilfe des Drehantriebs 14 gedreht, bis sich der am Einsatzmodul angebrachte Datenträger 26 in der Schärfeebene der Kamera befindet. Dieser Eindrehvorgang verläuft automatisch. Die Drehlagenposition der Fläche 71, an der der Datenträger 26 angebracht ist, kann in einer Speichereinrichtung des Messsystems abgespeichert sein. Auch die richtigen X- und Z-Einstellungen können abgespeichert sein und automatisch angefahren werden. Bei der hier gezeigten Ausführungsform wird der Adapter in der richtigen Drehstellung angehalten, so dass der Datenträger während der Bilderfassung feststeht und der Data Matrix Code von der Datenübertragungskamera 9 zuverlässig erfasst werden kann. Während der Annäherung der Kamera an die Datenübertragungsposition wird die Beleuchtungseinrichtung 60 automatisch eingeschaltet.

Bei einer anderen Ausführungsform ist eine länger andauernde, exakte Positionierung des Datenträgers in der Schärfeebene der Datenübertragungskamera nicht nötig. Bei dieser Ausführungsform wird der Adapter maximal einmal um seine Drehachse 13 gedreht, während die Datenübertragungskamera 10 in schneller Folge Einzelbilder des sich drehenden Adapters erfasst und an die Auswerteeinheit 20 überträgt. Gleichzeitig hierzu oder zeitlich versetzt erfolgt eine rechnergestützte Auswertung der Einzelbilder im Hinblick auf mindestens ein Bildparameter, der ein Maß für die Positionierung des Datenträgers in Bezug auf die Schärfezone der Kamera 10 darstellt. Hierzu kann beispielsweise der Kontrast der Einzelbilder ausgewertet werden, der bei der überwiegenden Mehrzahl der Einzelbilder nahe bei Null liegen wird, da der von der Kamera 10 erfasste Rand des sich drehenden Adapters außerhalb der Schärfezone der Kamera liegt. Nur in denjenigen Drehungstellungen, in denen der schwarz/weiße Datenträger 26 bei der Drehung des Adapters durch die Schärfezone der Datenübertragungskamera 10 verläuft, entstehen Bilder mit Kontrast, wobei das kontrastreichste Einzelbild zu einer Drehposition gehört, bei der der Datenträger sich bestmöglich in der Schärfezone der Kamera 10 befindet. Diese Bestimmung eines Auswahl-Einzelbildes durch die rechnergestützte Auswahl desjenigen Einzelbildes der Folge, in dem der Bildparameter einer Positionierung des Datenträgers in der Schärfezone der Optik entspricht, kann während oder unmittelbar nach der Drehung des Adapters durchgeführt werden. Anschließend wird das Auswahl-Einzelbild, das einer scharfen Abbildung des Datenträgers entspricht, zur Ermittlung der Modulinformation in der Auswerteeinheit 20 ausgewertet. Diese Ausführungsform ermöglicht eine besonders schnelle Erfassung der Modulinformation und kann mit geringem konstruktivem Aufwand an Adapter und Drehantrieb realisiert werden.

Bei der in Fig. 3 gezeigten Ausführungsform besteht der informationstragende Teil des Datenträgers 26 aus einem Data Matrix Code. Dabei handelt es sich um einen zweidimensional strukturierten Code nach ISO/IEC 16022, Code-Typ EEC 200. Ähnlich wie ein Barcode repräsentiert er die in ihm enthaltene Information durch helle und dunkle rechteckige Felder. Der Code kann beispielsweise direkt mit einer Laserbeschriftungsmaschine in den Werkstoff des Einsatzmoduls eingraviert werden.

Der Data-Matrix-Code ist ein zweidimensionaler grafischer Code mit relativ hoher Speicherkapazität. Er verschlüsselt die Daten in einer Matrix horizontal und vertikal. Bei gleicher Fläche enthält der Data-Matrix-Code eine ca. 100fach höhere Speicherkapazität als ein eindimensionaler Barcode. Der Data Matrix Code kann bei minimalen Platzbedarf bis zu 2000 beliebige Zeichen enthalten und kann so nicht nur einen Index, sondern die tatsächliche Information überall verfügbar machen (portable, optisch lesbare Datenbank). Hinzu kommt die hervorragende Lesbarkeit: Durch hohe Daten-Redundanzen ist selbst bei Zerstörung von 25% des Codes eine problemlose Rekonstruktion möglich. Die Lage der Codes spielt beim Lesen keine Rolle. Der Data Matrix Code bietet eine extrem hohe Sicherheit. Substitutionsfehler sind praktisch nicht möglich.

Im gezeigten Ausführungsbeispiel ist der Data Matrix Code auf ein Klebeetikett gedruckt und dieses ist an die Planfläche 71 des Einsatzmodul angeklebt. Die an die CCD-Kamera 10 angeschlossene Bildauswerteeinheit 20 wertet das Bild mittels einer speziellen Lesesoftware aus und wandelt die Bildinformation, die in Form heller und dunkler Felder vorliegt, in alphanumerische Zeichen um, die die Modulinformation repräsentieren.

Ist die laterale Ausdehnung des Codes größer als das Bildfeld der Datenübertragungskamera 10, so kann der Code durch Verfahren der Kamera 10 entlang der vertikalen Achse 8 und/oder einer senkrecht dazu gerichteten horizontalen Achse gescannt werden. Dies gilt auch beim Eindrehen in die Schärfeebene. Wie schon erwähnt, ist ein Lesen der Codes während der Rotation des Einsatzmoduls ebenfalls möglich.

Die mit Hilfe der Übertragungseinrichtung 27 automatisch zur Auswerteeinheit übertragenen Daten des verwendeten Adapters können nun auf unterschiedliche Weise genutzt werden. Ist eine Datenbank mit allen Adapter- bzw. Einsatzmoduldaten vorhanden, so können aufgrund einer Modulidentifikation alle relevanten Daten, insbesondere die Hilfskoordinaten des eingesetzten Adapters aus der Datenbank ausgelesen und für die weitere Verarbeitung zur Verfügung gestellt werden. Es ist auch möglich, mit oder ohne eine solche Datenbank alle relevanten Daten aus dem Datenträger auszulesen und auf Grundlage der ausgelesenen Daten den weiteren Messvorgang zu steuern. Gegebenenfalls kann eine Datenbank auch mit Daten ergänzt werden, die von einem Datenträger des Moduls ausgegeben werden. Da die Datenübertragung insbesondere der Hilfskoordinaten automatisch und ohne Eingriff einer Bedienperson erfolgt, sind Bedienfehler in diesem Stadium des Messvorganges ausgeschlossen, was die Prozesssicherheit erhöht. Nach der Datenübertragung ist der verwendete Adapter eindeutig identifiziert und seine Position der Messeinrichtung bekannt. Insbesondere ist auch die exakte Lage des Hilfsnullpunktes 38 relativ zum Messkoordinatensystem 17 bekannt.

Anschließend kann eine Kalibrierung bzw. Eichung der Messeinrichtung erfolgen, um einen Bezug zwischen Messkoordinatensystem und Werkzeugkoordinatensystem herzustellen. Dazu wird die Messoptik 10 mit Hilfe des Koordinatenschlittens auf den Hilfsnullpunkt 38 eingestellt. Hierzu kann der Bediener die Messoptik manuell über Tastendrücke oder, bei mechanischen Einrichtungen, über Handräder oder dergleichen, auf den Hilfsnullpunkt einstellen.

Da jedoch die exakte Lage des Hilfsnullpunktes in Bezug auf das Werkzeugkoordinatensystem nach der Datenübertragung bekannt ist, ist auch eine automatische Kalibrierung der Einrichtung derart möglich, dass die Messoptik auf Grundlage der vom eingesetzten Einsatzmoduls übertragenen Daten automatisch ohne Eingriff eines Bedieners bis auf den Hilfsnullpunkt oder zumindest bis in dessen Nähe verfahren wird. Dies kann mittels geeignet angesteuerter Antriebe sehr schnell erfolgen, was den Einmessprozess stark beschleunigt.

Ist nun die Messoptik 10 auf den Hilfsnullpunkt eingestellt, wird dieser Zustand von der Bedienperson beispielsweise durch einen Tastendruck an der Auswerte- und Bedieneinheit quittiert. Damit ist im Messsystem die Verbindung zwischen Adapter und Messeinrichtung hergestellt und der Adapter ist lokalisiert.

Nun kann der eigentliche Messvorgang beginnen, beispielsweise indem das zu vermessende Werkzeug in die Werkzeugaufnahme 32 eingesetzt wird. Mit der Messeinrichtung wird dann durch geeignetes Verfahren des Koordinatenschlittens die Kamera 10 zur Erfassung einer Werkzeugschneide oder dergleichen in die Messposition bewegt, um beispielsweise Absolutmaße des Werkzeuges in X- und Z-Richtung zu bestimmen. Zur Werkzeugvermessung wird die Messeinrichtung automatisch von ihrer Datenübertragungskonfiguration in eine Messkonfiguration umgeschaltet. Unter anderem wird dazu die für die Vermessung vorgesehene Bildauswertesoftware aktiviert und die Beleuchtung 60 wird automatisch abgeschaltet. Der optische Messvorgang kann in einer dem Fachmann bekannten Weise erfolgen und wird daher hier nicht näher erläutert.

Die durch die Messoptik mit Hilfe der Längenmesssysteme 11 und 12 und gegebenenfalls des Drehmesssystems 14 ermittelten Koordinaten einer Werkzeugschneide bezogen auf das Messkoordinatensystem werden mit Hilfe der Koordinaten des eingemessenen Hilfsnullpunktes durch die Auswerteeinheit in Absolutkoordinaten der entsprechenden Werkzeugdimensionen bezogen auf den logischen Nullpunkt 36 des Werkzeuges bzw. der Werkzeugaufnahme umgerechnet. Diese umgerechneten Daten, beispielsweise also die Länge Z des Werkzeuges und/oder ein oder mehrere Radien X, geben schließlich die für den Bearbeitungsvorgang maßgeblichen Werkzeugdimensionen an.

Das Messgerät kann so konfiguriert sein, dass der gesamte Ablauf nach einem korrekten Einsetzen des Adapters automatisch abläuft. Dazu kann das oben erwähnte Freigabesignal der Sicherungseinrichtung als Auslösesignal für die Schritte bis zur automatischen Datenübertragung und gegebenenfalls weiterhin für die folgenden Schritte für eine automatische Kalibrierung und gegebenenfalls automatische Werkzeugvermessung dienen.

Es sind zahlreiche Varianten zu dieser beispielhaft beschriebenen Ausführungsform möglich. So ist die beschriebene Messeinrichtung Bestandteil eines gesonderten Mess- und Einstellgerätes. Es ist auch möglich, dass die Messeinrichtung in eine Werkzeugmaschine integriert ist und z.B. deren Einrichtungen zur Werkzeugaufnahme nutzt. Alternativ zum optischen Vermessungssystem mit Messkamera 10 sind z.B. auch mechanische Systeme mit einem oder mehreren Messfühlern möglich. Dann kann eine für die Datenübertragung optimierte, gegebenenfalls einfach aufgebaute Datenübertragungskamera verwendet werden. Diese kann an jede geeignete Stelle des Messgerätes angebracht sein. Der Antrieb einer oder mehrerer Achsen kann auch manuell erfolgen, z.B. über geeignete Handräder.

## Patentansprüche

1. Verfahren zum Vermessen eines Werkzeuges mit Hilfe einer Messeinrichtung, die mit einer Auswerte- und Bedieneinheit ausgestattet ist und der mehrere Adapter zur lagedefinierten Anordnung von Werkzeugen an der Messeinrichtung zugeordnet sind, wobei ein Adapter ein Grundmodul und mindestens ein dem Grundmodul zugeordnetes Einsatzmodul mit einer Werkzeugaufnahme zur Aufnahme eines zu vermessenden Werkzeuges aufweist, das Verfahren mit folgenden Schritten:
- Vermessen des Einsatzmoduls zur Bestimmung von Hilfskoordinaten eines an dem Einsatzmodul angeordneten Hilfsnullpunktes;
- Aufzeichnen einer für das Einsatzmodul spezifischen Modulinformation an dem Einsatzmodul, wobei die Modulinformation vorzugsweise die Hilfskoordinaten umfasst;
- Einsetzen des Einsatzmoduls in ein Grundmodul zur Bildung eines Adapters;
- Automatische Übertragung der Modulinformation von dem Einsatzmodul zur Messeinrichtung mit Hilfe mindestens einer Datenübertragungskamera;
- Kalibrierung der Messeinrichtung mit Hilfe des Hilfsnullpunkts;
- Einsetzen eines Werkzeuges in die Werkzeugaufnahme;
- Vermessen des Werkzeuges.

2. Verfahren nach Anspruch 1, **dadurch gekennzeichnet, dass** zum Vermessen des Werkzeuges mindestens eine Messkamera verwendet wird und dass die Messkamera auch als Datenübertragungskamera zur automatischen Übertragung der Modulinformation verwendet wird.

3. Verfahren nach Anspruch 2, bei dem die Messeinrichtung zur Datenübertragung automatisch in eine Datenübertragungskonfiguration und zur Vermessung des Werkzeuges automatisch in eine davon unterschiedliche Messkonfiguration umgeschaltet wird.

4. Verfahren nach Anspruch 2 oder 3, mit folgenden Schritten:
- Verfahren der Mess- und Datenübertragungskamera in eine Datenübertragungsposition zur Erfassung der Modulinformation;
- Automatische Übertragung der Modulinformation;
- Verfahren der Mess- und Datenübertragungskamera zu einer mit Abstand von der Datenübertragungsposition liegenden Messposition;
- Vermessen des Werkzeuges mit Hilfe der Mess- und Datenübertragungskamera.

5. Verfahren nach einem der vorhergehenden Ansprüche, bei dem eine Flächenkamera als Datenübertragungskamera verwendet wird.

6. Verfahren nach einem der vorhergehenden Ansprüche, bei dem das Aufzeichnen der Modulinformation eine Kodierung der Modulinformation durch mindestens einen zweidimensional strukturierten, optisch erfassbaren Datenträger umfasst.

7. Verfahren nach Anspruch 6, bei dem mindestens ein Datenträger mit einem Data Matrix Code verwendet wird.

8. Verfahren nach einem der vorhergehenden Ansprüche, bei dem die Datenübertragungskamera zur Erfassung von Modulinformation durch Scannen relativ zum Adapter bewegt wird.

9. Verfahren nach einem der vorhergehenden Ansprüche, **gekennzeichnet durch** eine aktive Beleuchtung eines die Modulinformation tragenden Datenträgers während der Datenerfassung **durch** die Datenübertragungskamera, wobei vorzugsweise die aktive Beleuchtung bei Vorbereitung der Datenübertragung automatisch eingeschaltet und nach Abschluss der Datenübertragung automatisch abgeschaltet wird.

10. Verfahren nach einem der vorhergehenden Ansprüche, **gekennzeichnet durch** eine Sicherung der Datenübertragung und/oder Datenverarbeitung derart, dass eine Übertragung der Modulinformation zwischen Einsatzmodul und Messeinrichtung und/oder eine Verarbeitung der Modulinformation in der Messeinrichtung nur dann durchgeführt wird, wenn der Adapter korrekt zusammengesetzt ist.

11. Verfahren nach einem der vorhergehenden Ansprüche, **gekennzeichnet durch** eine automatische Kalibrierung der Messeinrichtung mit folgenden Schritten:
- Zusammensetzen des Adapters in der Messeinrichtung;
- Überwachen des Zusammensetzens und Erzeugung eines Freigabesignals, wenn der der Adapter korrekt zusammengesetzt ist;
- Einleiten der zur automatischen Übertragung der Modulinformation vorgesehenen Schritte bei Empfang des Freigabesignals;
- Steuerung der Messeinrichtung mit Hilfe der Modulinformation zum automatischen Anfahren des Hilfsnullpunktes.

12. Messsystem zum Vermessen von Werkzeugen mit Hilfe einer Messeinrichtung (2), die eine Auswerte- und Bedieneinheit (20) aufweist und der mehrere Adapter (3) zur lagedefinierten Anordnung von Werkzeugen an der Messeinrichtung zugeordnet sind, wobei ein Adapter ein der Messeinrichtung lagedefiniert aufgenommenes Grundmodul (30) und mindestens ein dem Grundmodul zugeordnetes Einsatzmodul (31) mit einer Werkzeugaufnahme (32) zur Aufnahme eines zu vermessenden Werkzeuges aufweist, **gekennzeichnet durch** eine Übertragungseinrichtung (27) zur automatischen Übertragung von Modulinformation eines zusammengesetzten Adapters (3) zur Messeinrichtung, wobei die Übertragungseinrichtung mindestens eine Datenübertragungskamera (10) zur optischen Erfassung von an dem Einsatzmodul (31) aufgezeichneter Modulinformation aufweist.

13. Messsystem nach Anspruch 12, bei dem die Messeinrichtung mindestens eine Messkamera (10) zum Vermessen des Werkzeuges umfasst und dass die Messkamera auch als Datenübertragungskamera (10) zur automatischen Übertragung der Modulinformation verwendet wird (Mess- und Datenübertragungskamera (10)).

14. Messsystem nach Anspruch 13, bei dem die Messeinrichtung zur Datenübertragung automatisch in eine Datenübertragungskonfiguration und zur Vermessung des Werkzeuges in eine davon unterschiedliche Messkonfiguration umschaltbar ist.

15. Messsystem nach Anspruch 13 oder 14, bei dem die Mess- und Datenübertragungskamera (10) zwischen einer Datenübertragungsposition zur Erfassung der Modulinformation und einer mit Abstand von der Datenübertragungsposition liegenden Messposition zum Vermessen des Werkzeuges verfahrbar ist.

16. Messsystem nach einem der Ansprüche 12 bis 15, bei dem die Datenübertragungskamera (10) eine Flächenkamera ist.

17. Messsystem nach einem der Ansprüche 12 bis 16, bei dem die Datenübertragungskamera (10) zur Erfassung von Modulinformation durch Scannen relativ zum Adapter (3) bewegbar ist.

18. Messsystem nach einem der Ansprüche 12 bis 17, **dadurch gekennzeichnet, dass** die Übertragungseinrichtung (27) mindestens einen dem Einsatzmodul (31) zugeordneten Datenträger (26) zur Aufzeichnung von optisch erfassbarer Modulinformation aufweist, wobei der Datenträger für einen optischen Datenübertragungskontakt mit der Datenübertragungskamera (10) der Messeinrichtung ausgebildet ist.

19. Messsystem nach Anspruch 18, **dadurch gekennzeichnet, dass** der Datenträger (26) eine zweidimensional strukturierte, optisch erfassbare Information umfasst.

20. Messsystem nach Anspruch 18 oder 19, **dadurch gekennzeichnet, dass** der Datenträger (26) mindestens einen Data Matrix Code umfasst.

21. Messsystem nach einem der Ansprüche 12 bis 20, **gekennzeichnet durch** eine Beleuchtungseinrichtung (60) zur aktiven Beleuchtung eines die Modulinformation tragenden Datenträgers (26) während der Datenerfassung **durch** die Datenübertragungskamera.

22. Messsystem nach einem der Ansprüche 12 bis 21, **gekennzeichnet durch** eine Sicherungseinrichtung (55) zur Überwachung des Zusammensetzens des Adapters und zur Abgabe eines Freigabesignals, wenn der Adapter korrekt zusammengesetzt ist.

23. Messsystem nach Anspruch 22, bei dem die Sicherungseinrichtung einen Schalter (15) umfasst, der nur bei korrektem Passsitz des Einsatzmoduls in dem Grundmodul betätigbar ist.

24. Messsystem nach einem der Ansprüche 12 bis 23, **gekennzeichnet durch** eine für einen Datenübertragungskontakt mit der Datenübertragungskamera (10) konfigurierte Auswerte- und Bedieneinheit (20), die mindestens ein Arbeitsprogramm zur Verarbeitung von optisch erfasster Modulinformation der Datenübertragungskamera enthält.

25. Messsystem nach einem der Anspruch 24, bei dem die Auswerte- und Bedieneinheit (20) ein Arbeitsprogramm zur Dekodierung von in einem Data Matrix Code kodierter Information und/oder ein Arbeitsprogramm zur optischen Zeichenerkennung (OCR) enthält.

26. Einsatzmodul mit einer Werkzeugaufnahme zur Aufnahme eines Werkzeuges, wobei das Einsatzmodul derart an ein Grundmodul angepasst ist, dass durch Einsetzen mindestens eines Einsatzmoduls in ein Grundmodul ein Adapter zur lagedefinierten Anordnung eines Werkzeugs an einer Messeinrichtung herstellbar ist, wobei das Einsatzmodul mindestens einen Datenträger mit einer zweidimensional strukturierten optisch erfassbaren Information zur Aufzeichnung von optisch erfassbarer Modulinformation aufweist.

27. Einsatzmodul nach Anspruch 26, wobei der Datenträger mindestens einen Data Matrix Code aufweist.
